# EUROPEAN PATENT APPLICATION

(11) **EP 4 757 147 A1**
(43) Date of publication of application: **10.06.2026**
(21) Application number: 25216395.1
(22) Date of filing: 17.11.2025
(51) Int. Cl.: H02K 15/60, H02K 15/50

(54) **SYSTEM AND METHOD FOR REMOVING A COVER FROM A POWER GENERATOR ENCLOSURE**

(30) Priority: 09.12.2024 PL 45050624
(71) Applicant: GE Vernova Technology GmbH, 5400 Baden (CH)
(72) Inventor: WOJCIECHOWSKI, Piotr Hubert, 02-784 Warsaw (PL); PILICHOWSKA, Joanna Sylwia, 02-495 Warsaw (PL); KOWALCZYK, Michal, 24-105 Baranow (PL); PERKOWSKI, Szymon, 02-114 Warsaw (PL); WINTERS, Jeridiah James, Scarborough, 04074 (US); SKACHKOV, Nikita, Santa Barbara, 93103 (US)
(74) Representative: Freigutpartners IP Law Firm

(57) **Abstract**

A system and method for removing a cover (10) from a power generator enclosure (14) housing a stator and a rotor (20) is disclosed. A cover axial pull tool (42) is configured to lift a section of the cover (10) up and axially move the section of the cover from the power generator enclosure (14) to disengage from a stator frame (84) of the stator. A cover vertical lift tool (88) operates cooperatively with the power generator enclosure (14) and the cover axial pull tool (42) to provide a path for the section of the cover (10) to navigate when lifting the cover off from the cover axial pull tool with a hoist assembly (74), obviating contact between the cover and the enclosure.

## Description

### BACKGROUND

### TECHNICAL FIELD

Embodiments of this disclosure relate generally to industrial power generators, and more specifically, to a system and method for removing a cover from a power generator enclosure.

### DISCUSSION OF ART

In general, an industrial power generator includes two main parts - a stator and a rotor. Both the stator and the rotor are enclosed by a power generator enclosure. A cover for a power generator enclosure, also referred to as an end shield, closes an opening at a side of the enclosure about the ends of the rotor. The cover can support the weight of the power generator rotor bearing and contain hydrogen gas used to cool the power generator at maximum pressure without excessive distortion. A cover for a power generator typically includes two halves (e.g., an upper half portion and a lower half portion) that are coupled to the enclosure. The two halves of the cover may be bolted together by a joint plate positioned at either adjoining edge.

When service is performed on the power generator, at least one of the upper half portion or the lower half portion of the cover is removed in order to allow operators access to the internal components of the power generator. For example, every time a power generator undergoes an outage, at least one part of the cover has to be removed to allow access to the stator and the rotor. Usually, in an outage scenario, it is the upper half portion of the cover that is removed so that operators can have access to the stator and the rotor. A typical cover that includes both the upper half portion and the lower half portion, can be big, heavy and bulky, especially for hydrogen-cooled generators. Further, the cover can have a less than straightforward geometry due to a protruding segment on the inner face of the cover that is used to provide interference with the stator frame of the stator that is housed in the enclosure. For example, the upper half portion of the cover on the inner face that covers the enclosure can have a cone-shape or a bell-shape that makes removing this part of the cover from the enclosure difficult. Other factors which add to the challenge of removing the upper half portion of the cover is that there is limited space around the enclosure due to its proximity to a gas turbine or steam turbine that can act as a prime mover to turn the shaft of the rotor of the power generator. In addition, because there is a limited amount of space between the enclosure and the prime mover, there are only so many dedicated lifting points that can be utilized to facilitate the removal of the upper half portion of the cover.

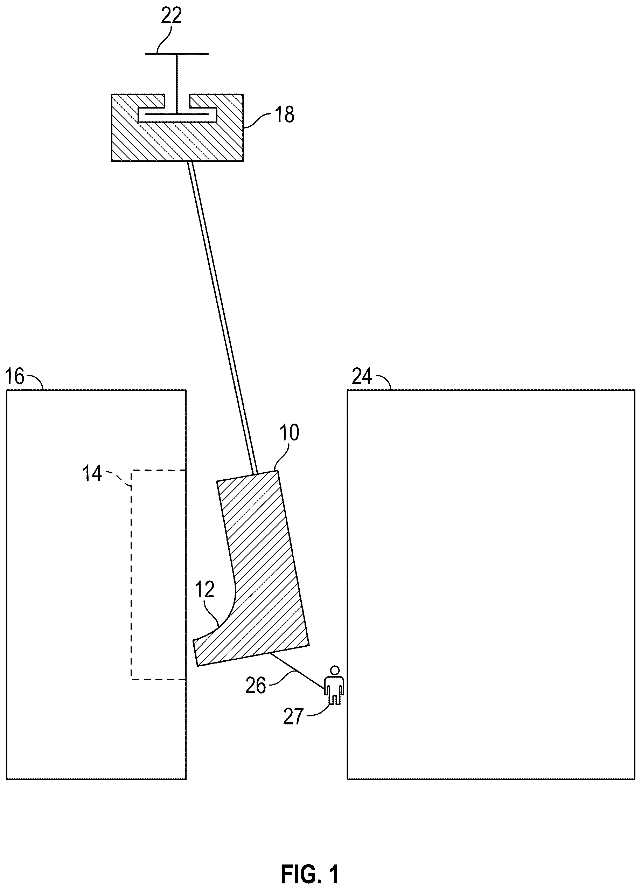

FIG. 1 shows a schematic of an example illustrating the removal of a section of a cover 10, such as the upper half portion with its protruding inner face 12, from an enclosure 14 of a power generator 16 and the limited space and lifting points that operators have to contend with that make the removal of the cover a challenging endeavor. As shown in FIG. 1, a hoist assembly 18 can be used to vertically lift (i.e., up and down) the cover 10 from the enclosure 14 after the protruding inner face 12 has been disengaged from the stator frame of the stator that is housed by the enclosure along with other components of the power generator 16. In the cover removal operation depicted in FIG. 1, a beam 22 such as an I-beam can be located above the power generator 16 in the limited space between the generator and an adjacent component of a prime mover 24 (e.g., a gas turbine or a steam turbine). The beam 22, which the hoist assembly 18 can travel along via a hoist trolley, can serve as a dedicated lifting point for lifting the cover 10 from the enclosure 14 of the power generator 16. Slings (or tag lines) 26 attached to the cover 10 are used by operators 27 positioned about the limited space between the power generator 16 and the prime mover 24 to control the movement of the cover as it is lifted from the enclosure 14 to the beam 22 by the hoist assembly 18. For purposes of clarity, only one operator 27 is shown in the example depicted in FIG. 1, however, it is understood that additional operators could be positioned in that location as well as other locations relative to the enclosure 14.

In the scenario depicted in FIG. 1, removal of the upper half portion of the cover 10 from the enclosure 14 of the power generator 16 typically involves the operators 27 attaching links and rings from the hoist assembly 18 to various connection points on the cover. The operators 27 also add additional chain hoists / pulling systems to other attachment points around the enclosure 14. In this manner, these additional chain hoists / pulling systems can be used to pull the upper half portion of the cover 10 in a horizontal position to disengage it from the stator frame, while the main hoist assembly 18 is used to pull the cover 10 vertically towards the beam 22.

In addition to the operators 27 near the lower end of the enclosure 14 and horizontally away from the enclosure to facilitate the horizontal movement of the cover 10 and disengagement of the protruding inner face 12 of the upper half of the cover from the stator frame, other operators are typically located above and at the same level as the operators but at different locations (e.g., near the cover removal/installation space). These operators 27 can also use the slings (or tag lines) 26 to control the movement of the cover 10 as the hoist assembly 18 lifts the cover 10 vertically towards the beam 22 in order to prevent contact between the cover 10 and the enclosure 14.

This cover removal process is complicated and time consuming for the operators involved in removing the cover 10 from the enclosure 14. For example, because of the limited space around the power generator 16, multiple maneuvers are necessary by the hoist assembly 18, the additional chain hoists / pulling systems, and the operators 27 to disengage the protruding inner face 12 of the upper half portion of the cover 10 from the stator frame and to navigate the cover once disengaged towards the beam 22 to avoid contact between the cover and the enclosure 14, as well as other components of the power generator 16 that are housed in the enclosure. The shape of the protruding inner face 12 of the upper half of the cover, which as noted above can be bell-shaped or cone-shaped, is another factor that contributes to the complexity of removing the cover 10 from the enclosure 14. Because of the limited space around the power generator 16 and the beam being in a fixed position with respect to the cover 10 and the enclosure 14, there will be an offset between the center of gravity of the cover and the beam 22 as the hoist assembly 18 lifts the cover vertically upwards to the beam. With this offset, there is a predisposition for the center of gravity of the cover 10 to cause the cover to flip or swing, and as a result, be directed towards the enclosure 14.

The operators 27 use the slings (or tag lines) 26 to oppose the predisposition of the center of gravity of the enclosure 14 that causes the cover to go towards the enclosure, to prevent the cover 10 from contacting the enclosure and damaging one or more of the enclosure, the power generator 16 and the cover 12. Maneuvering the cover 12 and its protruding section outside of the enclosure 14 while working against its will to swing or flip without collision with the enclosure is very challenging, as it is labor-intensive and time consuming. Not only do the counter action measures taken by the operators 27 to oppose the predisposition of the cover 10 to move back to the enclosure and be more underneath the beam 22 take great efforts, but it also puts the operators in harm's way of the cover as they sometimes are positioned under a heavy load (i.e., the cover), making the cover removal process a hazardous endeavor for the operators.

### BRIEF DESCRIPTION

The following presents a simplified summary of the disclosed subject matter in order to provide a basic understanding of some aspects of the various embodiments described herein. This summary is not an extensive overview of the various embodiments. It is not intended to exclusively identify key features or essential features of the claimed subject matter set forth in the Claims, nor is it intended as an aid in determining the scope of the claimed subject matter. Its sole purpose is to present some concepts of the disclosure in a streamlined form as a prelude to the more detailed description that is presented later.

In light of the aforementioned complexity and challenges associated with removing a section of a cover (e.g., an upper half portion) from an enclosure of a power generator in a limited space, there is a need for a better approach. That is, one that is not as complex and time consuming, and involves less operators to facilitate the cover removal process while increasing the safety of those operators involved in the process. Further, this approach should ensure that contact between the cover, the enclosure and the components of the power generator is avoided in order to prevent damage of these items.

Embodiments described herein provide solutions that address the issues associated with the complexity and challenges of the current approach that is deployed to remove a cover from an enclosure of a power generator in a safe and controlled manner. These solutions include a system and method that reduce the number of operators that are necessary to facilitate the removal of the cover from the enclosure of the power generator, increase the safety of the operators that are involved in the removal process, are less labor-intensive and practically hands-free at least with respect to disengaging the cover from the stator frame and enclosure, and navigating the limited space around the generator as the disengaged cover is maneuvered about the enclosure and power generator by the hoist assembly to the fixed position located above the generator enclosure space, all while ensuring that contact between the cover, the enclosure and the components of the power generator is avoided.

The system and method of the various embodiments can utilize a cover axial pull tool and a cover vertical lift tool to remove a section of a cover such as an upper half portion of the cover that has an inner face with a protruding section that is used to provide interference with the stator. The cover axial pull tool allows for the cover half to be pulled out of the stator frame almost hands free. There is no need for excessive rigging and iterative movements to safely get the cover to disengage from the stator frame. The cover vertical lift tool allows for quick and fully guided cover half removal and lifting operations that work regardless of the center of gravity of the cover and the overhead lifting point positions. In particular, both the cover axial pull tool and the cover vertical lift tool allow for the cover center of gravity to be offset in relation to the available lifting points, which solves a lot of the safety concerns related to the operation that are present in the current approach.

In one embodiment, the cover axial pull tool can include a cover mounting plate that is configured to be mounted to the section of the cover (e.g., the upper half portion) and a portion of the enclosure. The cover axial pull tool can further include a vertical lift assembly that is coupled to the cover mounting plate and configured to lift the section of the cover vertically after mounting the cover mounting plate to the cover and the portion of the enclosure. The cover axial pull tool also can include a mechanical linear actuator assembly configured to disengage the section of the cover from the stator frame and move the cover mounting plate and the vertical lift assembly axially in relation to the enclosure.

In one embodiment, the vertical lift assembly of the cover axial pull tool can utilize hydraulic cylinders to vertically lift the upper half portion of the cover to create a horizontal gap between the cover and the stator parts. In this manner, the cover half can be disengaged from the stator frame by using the mechanical linear actuator assembly to axially move the cover away from the enclosure. Because there is a horizontal gap that is created by utilizing the hydraulic cylinders, the risk of scratching the cover, the enclosure and the stator parts housed in the enclosure is eliminated as the mechanical linear actuator assembly moves the cover axially from the enclosure.

In one embodiment, the mechanical linear actuator assembly of the cover axial pull tool can utilize a lead screw hand-wheel that can be turned by an operator to enable the tool to axially move the cover away from the power generator on linear bearings that are operatively coupled to the screw hand-wheel. In another embodiment, the mechanical linear actuator assembly can utilize a power-operated screw wheel, as opposed to a hand-wheel that is turned by an operator, to operate in conjunction with the linear bearings to axially move the cover from the enclosure. Regardless of what type of screw wheel is utilized, the cover axial pull tool ensures that no contact will be made between the cover and stator enclosure parts (e.g. no scratching on any of the gasket surfaces will occur). In addition, with the mounting location that is provided with the cover mounting plate, the cover axial pull tool eliminates any risk related to the center of gravity offset of the cover with respect to the dedicated lifting point (i.e., the beam above the power generator enclosure space) such as tipping or swaying of the cover and possibly contacting the enclosure. Instead, the cover axial pull tool allows the cover removal operation to be performed smoothly and in a controlled manner without any rigging required.

In one embodiment, the cover vertical lift tool can include a vertical guide rail assembly and a trolley lift assembly that operate cooperatively with the enclosure, power generator and the cover axial pull tool to facilitate a quick and fully guided removal and lifting of the cover half from the cover axial pull tool via the vertical guide rail assembly, the trolley lift assembly, and the hoist assembly. The vertical guide rail assembly and the trolley lift assembly of the cover vertical lift tool not only make the removal and lifting of the cover half quick, but these operations can be performed in a controlled manner regardless of the cover's center of gravity and the overhead lifting point positions of the beam with respect to the power generator enclosure space. By being able to disregard the cover shape and the lifting point location, the cover vertical lift tool can lift and remove the cover in one continuous operation without multiple iterations and changed rigging positions that are needed with the current approach to ensure that there will be no collision with the power generator enclosure.

This obviates the necessity to have a lot of operators positioned about the power generator enclosure space to counter the cover's inclination to swing or flip towards the power generator and the enclosure, and make contact due to the lifting point offset in relation to the cover's center of gravity. In addition to eliminating the labor-intensive measures that are used in the current cover removal process due to this lifting point offset that occurs between the cover's center of gravity (because of its protruding section) and limited space, the operators are safer in the cover removal and lifting operations that are performed with both the cover vertical lift tool and the cover axial pull tool, as they do not have to work under a suspended load. In addition, the controlling of the vertical movement and guiding of the cover half outside of the enclosure that is provided with the cover vertical lift tool and hoist assembly that facilitates the lifting, drastically eliminates those safety risks that are present with the current removal and lifting operation, as well as makes those operations quicker and more efficient.

In accordance with one embodiment of the disclosure, a system for removing a cover from a power generator enclosure housing a stator and a rotor is provided. The system comprises: a cover axial pull tool to pull a section of the cover from the power generator enclosure, wherein the cover axial pull tool is configured to lift the section of the cover up and axially move the section of the cover from the power generator enclosure to disengage from a stator frame of the stator and form a spacing between the power generator enclosure and the cover axial pull tool for parking the section of the cover; a cover vertical lift tool configured for placement in the spacing to operate cooperatively with the power generator enclosure and the cover axial pull tool to provide a path for the section of the cover to navigate when lifting the cover off from the cover axial pull tool; and a hoist assembly to operate cooperatively with the cover axial pull tool and the cover vertical lift tool to lift the section of the cover up and off from the cover axial pull tool, and continuing to lift the cover upward and away from the power generator enclosure without contact thereof, while navigating the path provided by the cover vertical lift tool.

In accordance with another embodiment, a method for removing a cover from a power generator enclosure housing a stator and a rotor is provided. The method comprises: placing a cover axial pull tool in a position adjacent to the cover of the power generator enclosure; mounting the cover axial pull tool to a section of the cover and a portion of the power generator enclosure; using the cover axial pull tool to lift the section of the cover; using the cover axial pull tool to axially move the section of the cover from the power generator enclosure to disengage from a stator frame of the stator and form a spacing between the power generator enclosure and the cover axial pull tool; placing a cover vertical lift tool in the spacing formed between the power generator enclosure and the cover axial pull tool after axially moving the section of the cover from the power generator enclosure, the cover vertical lift tool providing a guided path for the section of the cover to navigate when lifting the cover off from the cover axial pull tool; using a hoist assembly to lift the section of the cover up and off from the cover axial pull tool; directing the hoist assembly to steer the section of the cover along the guided path provided by the cover vertical lift tool; and continuing to use the hoist assembly to navigate the guided path provided by the cover vertical lift tool while lifting the section of the cover upward and away from the power generator enclosure without contact thereof.

### BRIEF DESCRIPTION OF THE DRAWINGS

The present technology will be better understood from reading the following description of non-limiting embodiments, with reference to the attached drawings, wherein below:
FIG. 1 shows a schematic view of an example depicting the removal of a cover from an enclosure of a power generator according to a current cover removal approach;
FIG. 2 shows a schematic of a more detailed view of an upper half portion of the cover depicted in FIG.1 in relation to an enclosure of a power generator that houses a stator and a rotor;
FIG. 3 shows a schematic view of a cover axial pull tool used to axially move the cover from the enclosure according to an embodiment of the disclosure;
FIGS. 4A and 4B show schematics of a perspective view and a cross-sectional schematic view, respectively, of the cover axial pull tool coupled to the enclosure and positioned about the rotor according to an embodiment of the disclosure;
FIG. 5 shows a schematic view of the cover axial pull tool depicted in FIG. 3 carried by a hoisting assembly according to an embodiment of the disclosure;
FIGS. 6A-6F schematically depict a process of using the cover axial pull tool to remove a cover from an enclosure of a power generator according to an embodiment of the disclosure;
FIGS. 7A-7C show various schematic views of a cover vertical lifting tool used to facilitate vertical lifting of a cover deployed in conjunction with the cover axial pull tool according to an embodiment of the disclosure;
FIG. 8 shows a schematic view of a trolley lift assembly that is a component of the cover vertical lift tool that is used to facilitate vertical lifting of a cover from an enclosure of a power generator according to an embodiment of the disclosure;
FIG. 9 shows a schematic view of a vertical guide rail assembly that is another component of the cover vertical lift tool that is used with the trolley lift assembly depicted in FIG. 7 to facilitate vertical lifting of the cover from the enclosure of a power generator according to an embodiment of the disclosure;
FIGS. 10A-10K schematically illustrate a lifting operation of a cover from the enclosure of a power generator using the cover vertical lift tool, the cover axial pull tool, and a hoist assembly according to an embodiment of the disclosure;
FIG. 11 shows a schematic view of a hoist assembly using two beams for load transfer between the beams during a lifting operation of the cover from the enclosure of the power generator with the cover vertical lift tool according to an embodiment of the disclosure; and
FIG. 12 shows a schematic view of a hoist assembly using a cantilever beam with a counterweight that can be used during a lifting operation of the cover from the enclosure of the power generator according to an embodiment of the disclosure.

### DETAILED DESCRIPTION

Example embodiments of the present disclosure will be described more fully hereinafter with reference to the accompanying drawings, in which some, but not all embodiments are shown. Indeed, the present technology may be embodied in many different forms and should not be construed as limited to the embodiments set forth herein; rather, these embodiments are provided so that this disclosure will satisfy applicable legal requirements. For like numbers may refer to like elements throughout.

As indicated above, the disclosure provides a system and method for removing a cover from a power generator enclosure. The system and method of the various embodiments can utilize a cover axial pull tool and a cover vertical lift tool to remove and lift a section of a cover such as an upper half portion of the cover that has an inner face with a protruding section that can take the form of a bell-shape or a cone-shape from the enclosure. The cover axial pull tool allows for the cover half to be axially pulled out of the stator frame almost hands free. There is no need for excessive rigging and iterative movements to get the cover to disengage out from the stator frame. The cover vertical lift tool allows for quick and fully guided cover half removal and lifting operations that work regardless of the center of gravity of the cover and the overhead lifting point positions.

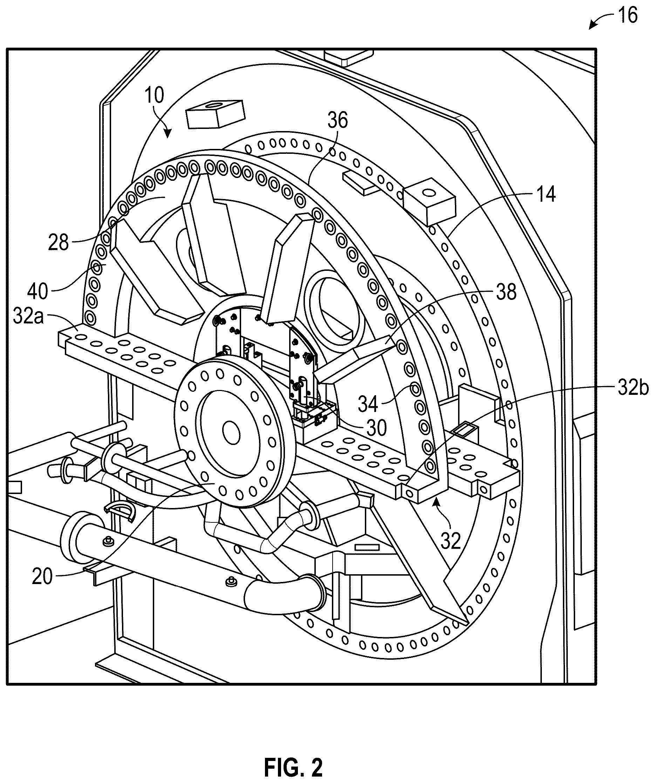

Referring again to the figures, FIG. 2 shows a schematic of a more detailed view of an upper half portion of a cover 10 like the one schematically depicted in FIG. 1 in relation to an enclosure 14 of a power generator 16 that houses a stator and a rotor 20. As shown in FIG. 2, the upper half portion of the cover 10 can include includes a semi-circular shaped section 28 with a cut-out 30 in the middle to fit over the rotor 20 that is placed on a base section 32 formed of two base sections 32a and 32b separated by the cut-out and the rotor. The semi-circular shaped section 28 of the cover 10 and each of the two base sections 32a and 32b can have a multiple of mounting holes 34 that are used to respectively couple the upper half portion of the cover to the enclosure 14 and the lower half portion of the cover (not depicted in FIG. 2).

On an inner face 36 of the upper half portion of the cover 10 that attaches to the enclosure 14 and a stator frame of the stator housed in the enclosure is the protruding section feature (not depicted in FIG. 2) that can have a shape that corresponds to the geometry of the mounting surface of the stator frame upon which it is installed. The shape typically includes a bell-shape or a cone-shape, however, it is understood that the embodiments of the disclosure are suitable for use with any shape that is configured to have an interference with the geometry of the surface of the stator frame to which the cover is installed. FIG. 2 further shows that the upper half portion of the cover 10 can include ribs 38 on an outer face 40 of the semi-circular shaped section 28 of the cover that extend radially from the cut-out 30 towards a peripheral edge of section 28 to provide structural support to account for the axial forces that arise during the operation of the power generator 16.

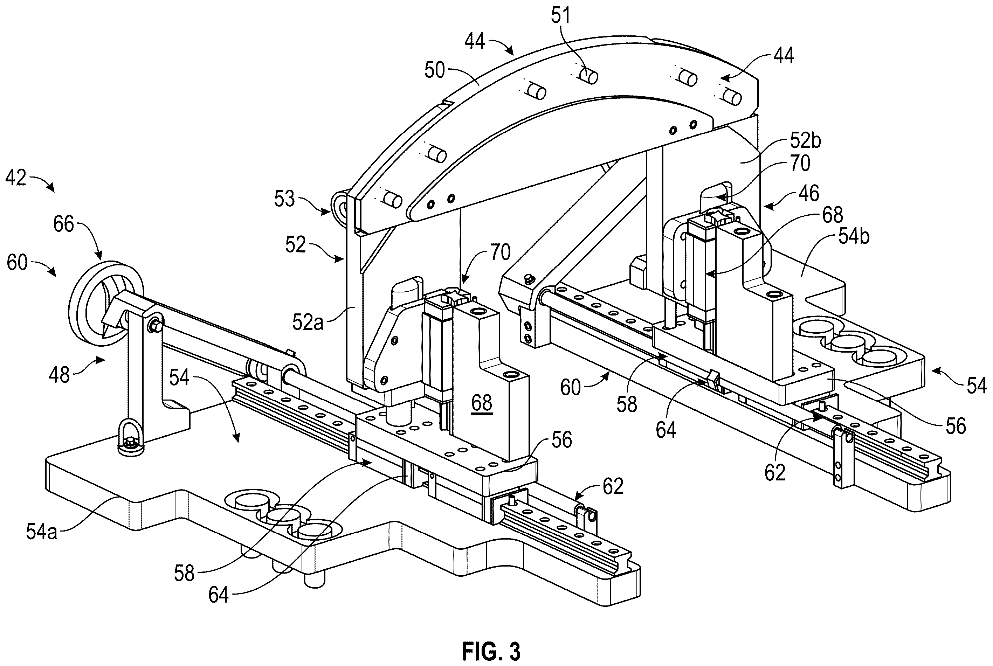

FIG. 3 shows a schematic view of a cover axial pull tool 42 that can be used as part of a system to remove a cover such as an upper half portion of a cover 10 like that depicted in FIG. 2 from an enclosure 14 of a power generator 16 according to an embodiment of the disclosure. In one embodiment, the cover axial pull tool 42 is configured to lift a section of the cover (e.g., the upper half portion with the protruding feature on the inner face) up and axially move the section of the cover from the enclosure to disengage it from a stator frame of the stator housed in the enclosure 14 and to form a spacing between the enclosure and the cover axial pull tool for parking the section of the cover.

As shown in FIG. 3, the cover axial pull tool 42 can include a cover mounting plate 44 configured to be mounted to the upper half portion of the cover 10 and a portion of the enclosure 14 of the power generator. For purposes of clarity in discussing features of the cover axial pull tool 42, both the cover and the enclosure, as well as the components housed in the enclosure such as the stator and rotor are not depicted in FIG. 3. The cover axial pull tool 42 can further include a vertical lift assembly 46 coupled to the cover mounting plate that is configured to lift the section of the cover vertically after mounting the cover mounting plate 44 to the section of the cover and the portion of the power generator enclosure. The cover axial pull tool 42 can also include a mechanical linear actuator assembly 48 configured to move the cover mounting plate 44 and the vertical lift assembly 46 axially in relation to the power generator enclosure, so that the section of the cover can be disengaged from the stator frame and moved away from the enclosure 14.

In one embodiment, as shown in FIG. 3, the cover mounting plate 44 can include a semi-circular shaped upper section 50 having a plurality of fasteners 51, such as for example bolts, that are configured to correspondingly fasten to the mounting holes disposed on the semi-circular shaped section of the cover like that depicted in the cover 10 shown in FIG. 2. The opposing side of the semi-circular shaped upper section 50 (i.e., the side or face that does not connect to the cover) can include a number of lugs 53 that can be utilized by a hoist assembly to lift the cover axial pull tool 42 to and from the installation and removal location of the cover (i.e., the enclosure space about the enclosure and the prime mover). The cover mounting plate 44 can further include a post support section 52 formed of a first support post structure 52a and a second post support structure 52b with a spacing therebetween to support the upper section 50. The cover mounting plate 44 can also include a base section 54 having a first base section 54a and a second base section 54b to correspondingly support the first support post structure 52a and the second support post structure 52b thereon. To this extent, the upper section 50 is configured to be mounted to the upper half portion of the cover and the base section 54 via the first base section 54a and a second base section 54b is configured to be mounted to the lower half portion of the cover that has a matching flange/section.

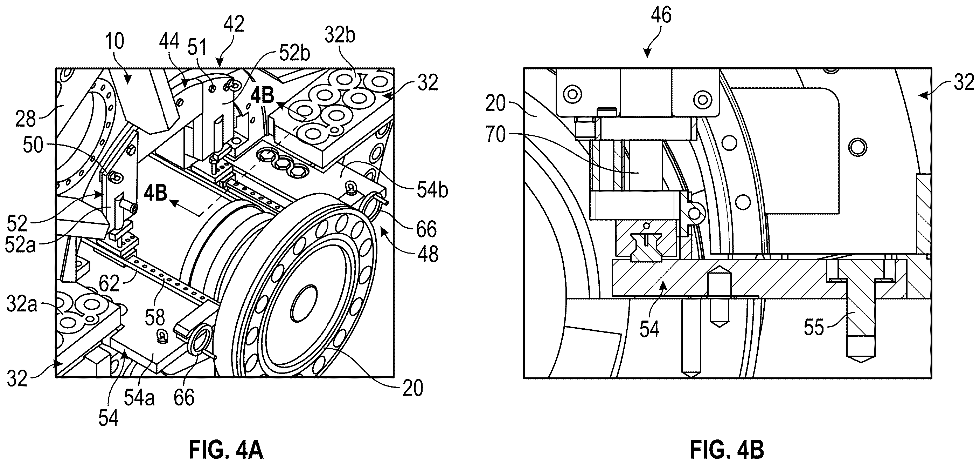

FIGS. 4A and 4B show further details of the coupling of the cover axial pull tool 42 to the upper half portion of a cover 10 like that discussed with respect to FIG. 2, after the tool has been moved into the enclosure space between the enclosure and the prime mover, and moved into a position for coupling with the enclosure 14 via the mechanical linear actuator assembly 48. In particular, FIG. 4A shows the upper section 50 of the cover mounting plate 44 coupled to mounting holes in the upper half portion of the cover 10 via the fasteners 51. In one embodiment, as shown in FIGS. 4A and 4B, the base sections 54a and 54b of the cover mounting plate 44 can be placed underneath the base sections 32a and 32b of the cover 10 and coupled via fasteners 55 that can include any of a multitude of fastener devices like bolts. In this position, the vertical lift assembly 46 of the cover axial pull tool 42 can be deployed to engage the hydraulic cylinders and the vertically-oriented linear bearings to vertically lift the cover to disengage from the stator frame.

Referring again to FIG. 3, the mechanical linear actuator assembly 48 of the cover axial pull tool 42 can include a pair of traveling plates 56 spaced apart from each other to facilitate axial movement of the cover mounting plate 44 and the vertical lift assembly 46 in relation to the enclosure of the power generator. The mechanical linear actuator assembly 48 can further include a pair of linear bearings 58 that are each configured to receive one of the pair of traveling plates 56 thereon. The mechanical linear actuator assembly 48 can also include a pair of screw drive systems 60 operatively coupled to the pair of linear bearings 58 to drive axial movement of the cover mounting plate 44 and the vertical lift assembly 46 along the pair of linear bearings.

In one embodiment, each of the pair of screw drive systems 60 can include a thread rod 62 with an external thread formed thereon. A thread nut 64 with an internal thread corresponding can operate cooperatively with the external thread of the thread rod 64 allowing the thread rod to rotate within the thread nut. Each of the screw drive systems can also include a drive wheel 66 and accompanying timing belt to rotate the thread rod 62 within the thread nut 54. To this extent, the rotation of the drive wheel 66 results in a sliding interaction between the thread rod 62 within the thread nut 54, causing a translatory motion (i.e., axial movement) of the cover mounting plate 44 and the vertical lift assembly 46 disposed thereon. Although FIG. 3 only shows one drive wheel 66, it is understood that due to the view of the figure, another drive wheel would be located about the second post support structure 52b. In one embodiment, the drive wheel 66 can include a hand-operated drive wheel, however, it is understood that other drive wheel systems are suitable, such as for example, a power-driven drive wheel.

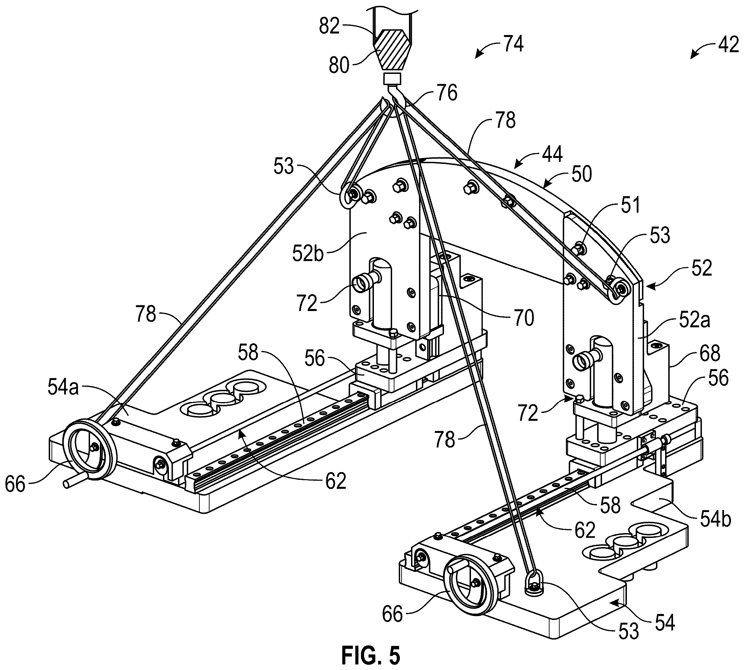

FIG. 3 shows that the vertical lift assembly 46 that can lift the upper half portion of the cover 10 vertically after mounting the cover mounting plate 44 to the cover and a portion of the enclosure can include a pair of vertically-oriented linear bearings 68. In addition, the vertical lift assembly 46 can include a pair of hydraulic cylinders 70 that are operatively coupled with the pair of vertically-oriented linear bearings 68. Each of the pair of hydraulic cylinders 70 is configured to receive hydraulic energy that generates a linear force and motion to advance the cylinder upwards along one of the pair of vertically-oriented linear bearings 68. Although not depicted in FIG. 3 because of the view of the figure, the vertical lift assembly 46 can further comprise a pair of limit screws 72 configured to lock the pair of hydraulic cylinders 70 in position in the pair of vertically-oriented linear bearings 68 after advancing upwards to a predetermined position (see FIG. 5 which shows another view of the cover axial pull tool 42).

FIG. 5 shows a schematic view of the cover axial pull tool 42 depicted in FIG. 3 being carried by a hoisting assembly 74 that can also be utilized as part of a system to remove a cover from an enclosure and lift it away from a power generator. In one embodiment, the hoist assembly 74 is configured to lift the cover axial pull tool 42 to within the enclosure space between the enclosure of the power generator and the prime mover (the enclosure, power generator and prime mover are not depicted in FIG. 5). The hoist assembly 74 can include a number of components to raise and lower a load. In general, the hoist assembly 74 can include a number of well-known components that can operate as part of a hoist assembly. For example, the hoist assembly 74 can include hooks such as a lower hook 76 that can be coupled to the cover axial pull tool 42 via slings 78 that attach to the lower hook and lugs 53 located about the cover axial pull tool 42. As shown in FIG. 5, the lugs 53 can be located on the semi-circular shaped upper section 50 of the cover mounting plate 44 of the cover axial pull tool 42, the base section 54, and even the post support section 52 although not expressly depicted in the figure. FIG. 5 further shows that the hoist assembly 74 can include a hoist frame 80 that contains the lifting mechanism to lift the load. A load chain 82 can connect the hoist frame 80 to a dedicated lifting point. Although not shown, the dedicated lifting point can include a beam such an I-beam positioned above the enclosure space between the enclosure of the power generator and the prime mover. To this extent, in one embodiment, the hoist assembly 74 can be used to move the cover axial pull tool 42 in and out of the enclosure space between the enclosure of the power generator and the prime mover.

Although the description of the hoist frame 80 is broadly described as having a lower hook 76, slings 78, a hoist frame 80, a load chain 82, and a dedicated lifting point, it is understood that the hoist assembly 74 can include additional components, such as for example, a gear and pulley mechanism that may be part of the lifting mechanism that is part of the hoist frame, safety latches, additional hooks. Further, it is understood, that the hoist assembly 74 is not limited to any particular type of assembly, and can include a number of well-known hoist assemblies that are used to move loads such electric hoists, pneumatic hoists and the like.

In addition, it is understood that the use of the hoist assembly and any of the aforementioned components are for illustrative purposes and not meant to be limiting to the various embodiments described herein. Those skilled in the art will readily appreciate that other well-known lifting mechanisms / tooling that are used to move and lift big, heavy, bulky objects with complex geometries are possible options that can have utility with the various embodiments.

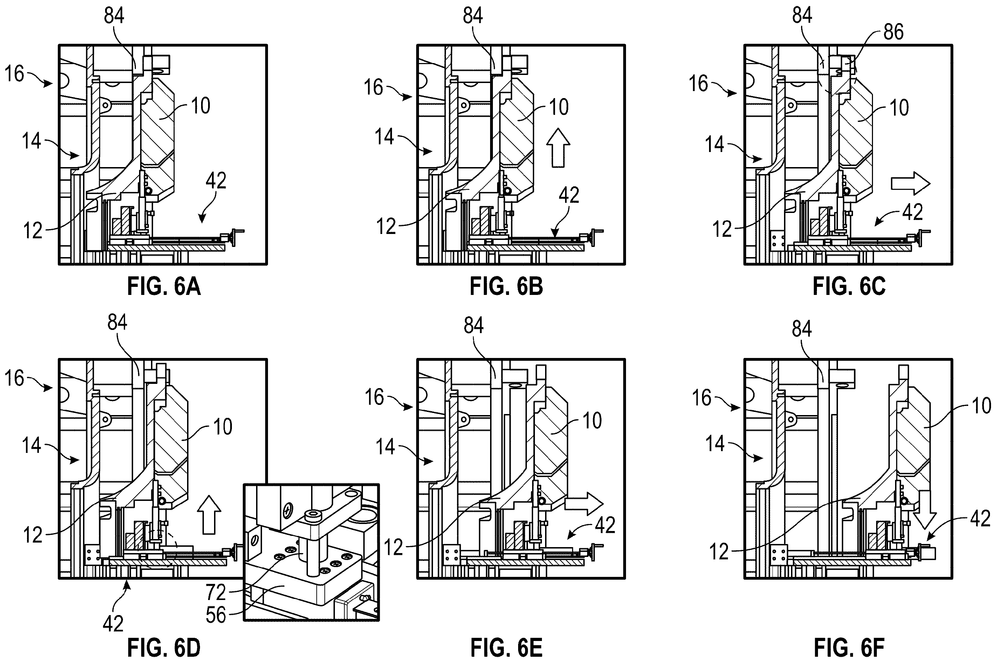

FIGS. 6A-6F schematically depict a process of using the cover axial pull tool 42 to remove a cover 10 from an enclosure 14 of a power generator 16. In FIG. 6A, the upper half portion of the cover 10 including the protruding inner face 12 of the cover is in place in the enclosure 14 engaged with a stator frame 84 of a stator housed in the enclosure of the power generator 16 along with other components such as a rotor. FIG. 6A further shows that the cover axial pull tool 42 has been moved into position in the enclosure space of the power generator 16 via the mechanical linear actuator assembly 48 of the cover axial pull tool. For example, an operator can use the screw drive systems 60 of the cover axial pull tool 42 to move the traveling plates 56 against the cover. The operator can then couple the cover mounting plate 44 of the cover axial pull tool 42 to the cover 10 via the various fasteners 51.

In FIG. 6B, the cover 10 can then be vertically lifted a predetermined height to initiate the removal of the cover from the enclosure. In one embodiment, jacking screws can be placed underneath the cover 10 and be used to vertically lift the cover a predetermined initial height. For example, in one embodiment, the jacking screws can be used to initially lift the cover 10 up to a maximum of 0.25 inches to facilitate the cover removal from the enclosure 14. It is understood that this initial lift amount is only illustrative of one possible initial height lift value and is not meant to be limiting to the embodiments described herein. Those skilled in the art will recognize that the initial height lift will depend on a number of factors that can include, but are not limited to, the geometry of the cover and the stator frame and any gap that exists therebetween when the cover is fitted over the enclosure. In any event, the lifting of the cover with the jacking screws is performed to close any gap that exists between the cover and the stator frame.

Upon lifting the cover 10 upwards, the mechanical linear actuator assembly 48 of the cover axial pull tool 42 can be used to axially move the cover away from the enclosure 14 to disengage it from the stator frame 84 as shown in FIG. 6C. For example, an operator can use the screw drive systems 60 to axially move the traveling plates 56, of which the cover 10 is supported thereon, away from the enclosure 14 and disengage it from the stator frame 84 as noted by reference element 86 in FIG. 6C.

In FIG. 6D, the vertical lift assembly 46 of the cover axial pull tool 42 can be used to vertically lift the cover 10 upward an additional height beyond the initial height provided by the jacking screws. In particular, the vertically-oriented linear bearings 68 and the hydraulic cylinders 70 can be used to vertically lift the cover 10 to this additional vertical height. For example, in one embodiment, the vertical lift assembly 46 can be used to lift the cover an additional two inches. FIG. 6D further shows that after lifting the cover 10 to this added height, the limit screws 72 can be utilized to lock the cover in at this height. It is understood that the limit screws 72 can also be used as a reference for an operator to ensure that the vertical lift assembly 46 vertically lifts the cover to a sufficient height. Furthermore, it is understood that this additional height like the initial height provided by the jacking screws is only illustrative of one set of vertical heights and is not meant to be limiting, as those skilled in the art will appreciate that the amount of vertical height that is necessary to disengage the cover will depend on several factors that can include, but are not limited to, the geometry and weight of the cover, as well as the geometry of the stator frame.

After lifting the cover 10 to the additional vertical height, the cover axial pull tool 42 can be utilized to move the cover further axially away from the enclosure 14 as shown in FIG. 6E. For example, the screw drive systems 60 of the mechanical linear actuator assembly 48 of the cover axial pull tool 42 can axially move the traveling plates 56 with the cover 10 thereon away from the enclosure 14. In this manner, the cover axial pull tool 42 can move the cover 10 to a parking location that is away from the enclosure 14 and stator frame 84, yet still in the enclosure space between the power generator 16 and the prime mover to facilitate servicing of the generator and internal components such as the stator and the rotor.

Once the cover 10 has been axially moved to the parking location position, the cover axial pull tool 42 can be further engaged to lower the cover as shown in FIG. 6F. For example, the limit screws 72 can be released, and the vertically-oriented linear bearings 68 and the hydraulic cylinders 70 of the vertical lift assembly 46 of the cover axial pull tool 42 can be used to lower the height of the cover 10. To this extent, the cover 10 can rest on the base section 54 of the cover mounting plate (i.e., the first base section 54a and a second base section 54b of the base section 54) of the cover axial pull tool 42.

While, for purposes of simplicity of explanation, the operations shown in FIGS. 6A-6F are described as a series of acts. It is to be understood and appreciated that the subject innovation associated with FIGS. 6A-6F are not limited by the order of acts, as some acts may, in accordance therewith, occur in a different order, concurrently with other acts, be split in such a manner that portions of the displayed acts are split and performed at different time instances as two or more acts. For example, instead of using jacking screws to facilitate the initial vertical lift of the cover, it is possible to utilize the vertical lift assembly 46 of the cover axial pull tool to perform this operation. Accordingly, modifications or variations of the acts depicted in FIGS. 6A-6F are possible. Moreover, not all illustrated acts may be required to implement a methodology in accordance with the innovation. Furthermore, two or more of the disclosed example methods can be implemented in combination with each other, to accomplish one or more features or advantages described herein.

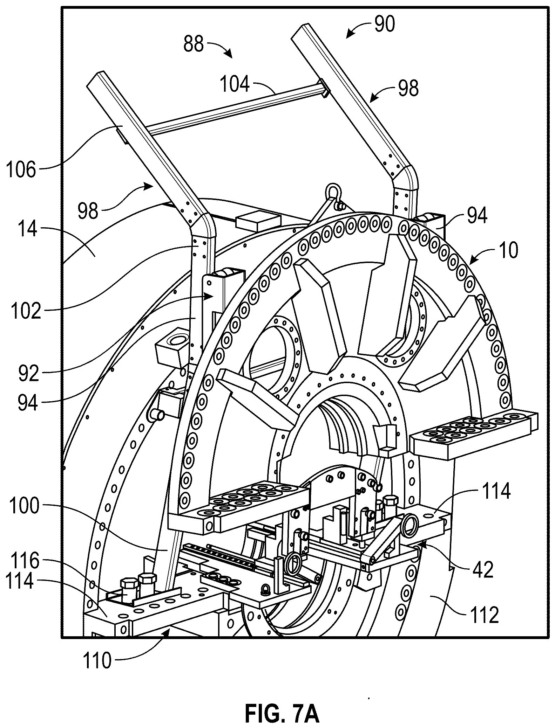

Another component of a system that can be used to remove the cover 10 from the enclosure 14 of a power generator 16 according to an embodiment includes the use of a cover vertical lift tool 88 as shown and discussed further in relation to FIGS. 7A-7C, 8 and 9. In one embodiment, the cover vertical lift tool 88 is configured for placement in the spacing between the enclosure 14 and the cover axial pull tool 42 after it has been axially moved from the enclosure with the cover thereon, to operate cooperatively with the enclosure, the cover axial pull tool, and the hoist assembly, to provide a path for the upper half portion of the cover to navigate when lifting the cover off from the cover axial pull tool with the hoist assembly. As shown in FIGS. 7A-7C, the cover vertical lift tool 88 can include a vertical guide rail assembly 90 configured for coupling to the enclosure 14 and a trolley lift assembly 92 to receive the upper half portion of the cover 10 from the cover axial pull tool 42.

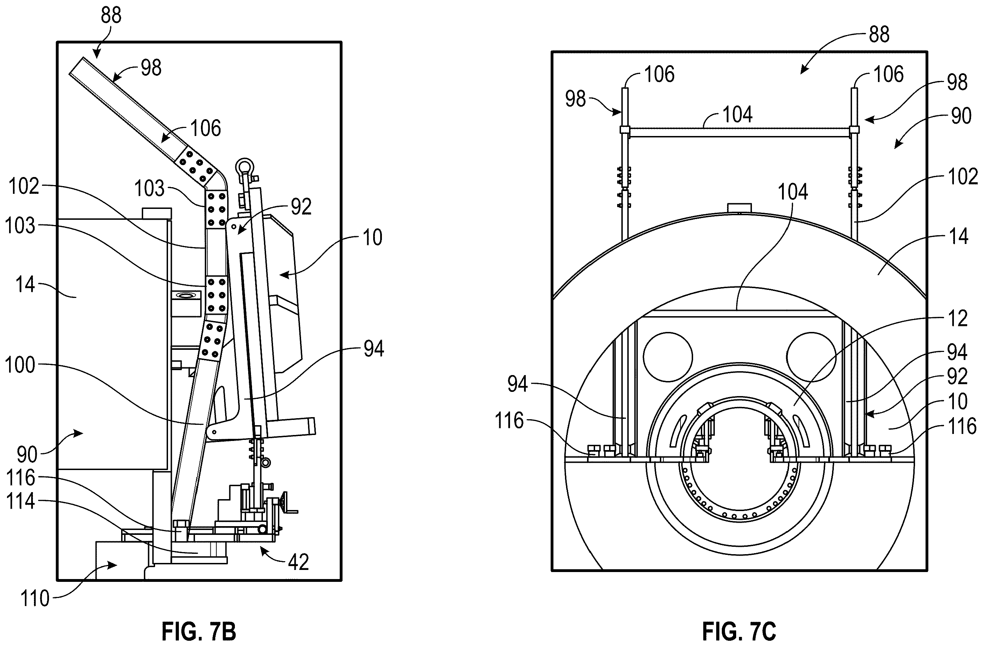

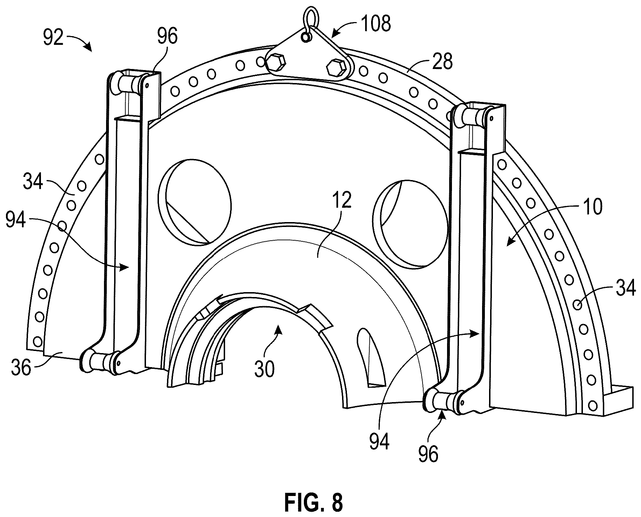

In one embodiment, the trolley lift assembly 92 can include a pair of trolley posts 94 as shown clearly in FIG. 7C and 8. Each of the trolley posts 94 can have a wheel assembly 96 (e.g., steel, nylon wheels and the like) on one side of the post. In one embodiment, the wheel assembly 96 can be disposed on a side of the trolley posts 94 that face the axial end of the enclosure 14. The opposing side of the posts 94 can be configured to mount to the upper half portion of the cover 10 via any of a number of fastener systems such as a bolt and nut assembly. For example, one end of the trolley posts 94 can be coupled to the mounting holes 34 on the periphery edge of the semi-circular shaped section 28 of the cover 10, while the opposing ends can be coupled to the lower portion of the cover near the cut-out 30 as shown in FIG. 8.

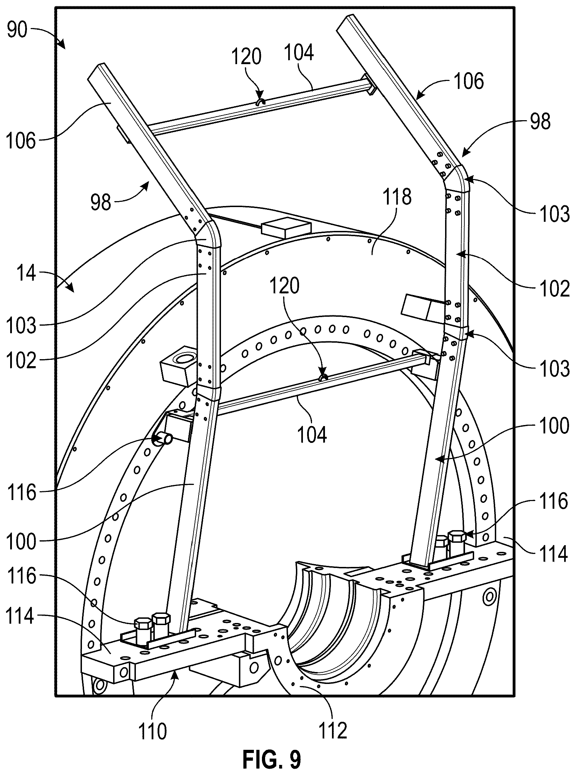

In one embodiment, the vertical guide rail assembly 90 can include a pair of vertically oriented guide rails 98 as shown in FIGS. 7A-7C and 9. Each of the vertically oriented guide rails 98 can have a bottom section 100 and a top section 102 that are coupled together via a connector 103. The bottom section 100 of the guide rails 98 is configured to be mounted to a section of the enclosure 14 and the top section 102 is configured to extend vertically upward and beyond a periphery of the enclosure 14 after mounting the bottom section to the enclosure. As shown in FIGS. 7A, 7B and 9, the bottom section 100 of the guide rails 98 can be mounted to a rotor support section 110 of the enclosure 14. The rotor support section 110 of the enclosure 14 can include a bottom support portion 112 that corresponds in shape with the rotor 20 such that the rotor is disposed directly thereover. Side platform portions 114 of the rotor support section 110 connect with a top surface of the bottom support portion 112 and extend radially to the sides of the enclosure 14. To this extent, the bottom sections 100 of the guide rails 98 can be mounted to one of the side platform portions 114 of the rotor support section 110 via mounting holes disposed on these side platform portions with mounting bolts and nut assembly 116.

FIGS. 7A, 7B and 9 further show that the top section 102 of the guide rails 98 can also be mounted to the enclosure. In one embodiment, the top section 102 of the guide rails 98 is mounted to a section of the enclosure that is above the rotor support section 110. For example as shown in FIG. 9, the top section 102 of the guide rails 98 can be mounted to a semi-circular portion 118 of the enclosure 14 that encompasses the rotor. In particular, the top section 102 of the guide rails 98 can be coupled to mounting holes arranged about the semi-circular portion 118 of the enclosure 14 via mounting bolts and nut assembly 116.

It is understood that the various sections of the guide rails 98 such as the bottom section 100 and the top section 102 are for purposes of nomenclature and are not meant to be limiting to various embodiments described. Instead of having rail guides formed from the bottom section 100 and the top section 102, the guide rails can be formed of more or less guide rails. For example, the guide rails can include a mid-section rail, or just a single rail delineated with segments to distinguish various regions of the rail as opposed to a modular arrangement of sections of the rails.

The vertical guide rail assembly 90 can further include a pair of horizontally extending cross rails 104 that couple the pair of vertically oriented guide rails 98 with each other. In one embodiment, as shown in FIG. 9, the horizontally extending cross rails 104 can have lifting points 120 disposed thereon to facilitate transporting the vertical guide rail assembly 90 in and out of the enclosure space between the enclosure 14 and the prime mover via a hoist assembly.

FIGS. 7A-7C and 9 show that the vertical guide rail assembly 90 can further include a pair of sloped guide rails 106 that extend obliquely from the top sections 102 of the pair of vertically oriented guide rails 98, with each of the sloped guide rails configured to extend over the enclosure 14. With this configuration for the vertical guide rail assembly 90, the hoist assembly 74 (not shown in FIGS. 7A-7C and 9) can steer the wheel assemblies 96 on the pair of trolley posts 94 along the pair of vertically oriented guide rails 98 and the pair of sloped guide rails 106. As shown in FIG. 8, the lifting of the trolley lift assembly 92 and the section of the cover placed thereon off from the cover axial pull tool 42 to above the enclosure 14 can be facilitated by a lifting plate 108 coupled to mounting holes on the peripheral edge of the semi-circular shaped section 28 of the cover 10. To this extent, the cover vertical lift tool 88 in conjunction with the hoist assembly 74 can facilitate the lifting operation in a manner that prevents any contact between the upper half portion of the cover 10 and the enclosure 14.

With this configuration, the cover vertical lift tool 88, that can include the vertical guide rail assembly 90 and the trolley lift assembly 92, can readily be placed in the gap that results by axially moving the cover axial pull tool 42 with the cover 10 thereon from the enclosure 14. In this position, the vertical guide rail assembly 90 can provide enough clearance from the enclosure 14 for the protruding section 12 of the cover 10, so that the protruding section does not interfere with the enclosure, the stator and any other nearby structure (e.g., cables, trays, etc.). This allows the hoist assembly to lift the trolley lift assembly with the cover 10 supported thereon in a controller manner such that the hoist assembly steers the trolley lift assembly along the rails, navigating the enclosure, and up to a fixed lifting point above the power generator without having any contact between the cover and the enclosure and generator to obviate any damage of these components.

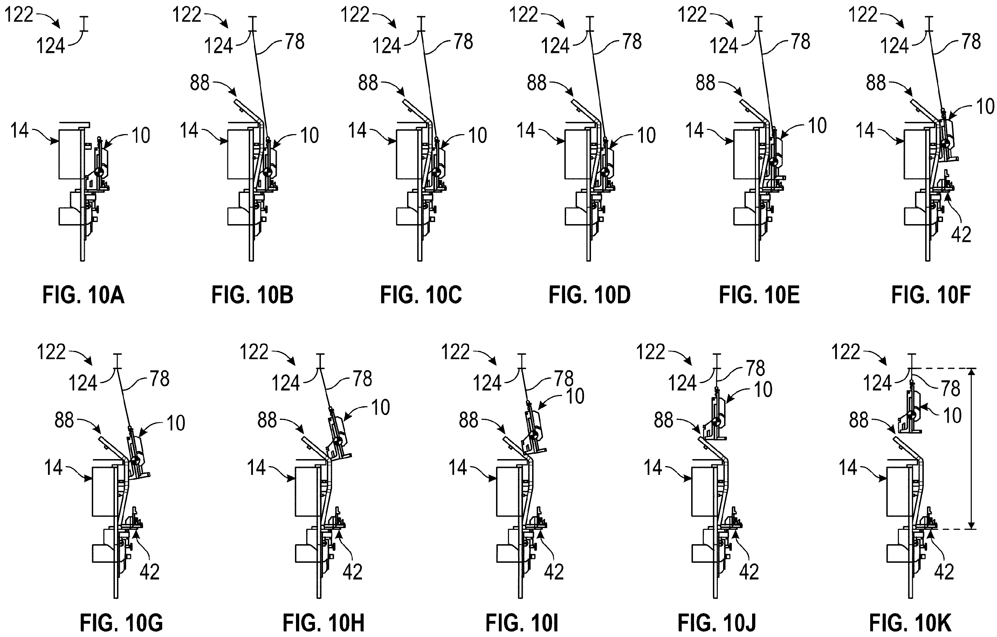

FIGS. 10A-10K schematically illustrate a lifting operation of a cover 10 from the enclosure 12 of a generator 16 using a system 122 that can include the cover vertical lift tool 88, the cover axial pull tool 42, and the hoist assembly 74 according to an embodiment of the disclosure. The lifting operation process begins at FIG. 10A where the cover axial pull tool 42 has been used to disengage the cover 10 from the stator frame and axially move it away from the enclosure 14. With enough space separating the disengaged cover 10 on the cover axial pull tool 42 from the enclosure 14, the cover vertical lift tool 88 can be introduced in the space and installed onto various sections of the enclosure (e.g., rotor support section 110 of the enclosure and semi-circular portion 118 of the enclosure) as shown in FIG. 10B. In addition, per FIGS. 10B, 10C and 10D, the hoist assembly can be connected to the cover 10. For purposes of clarity, FIGS. 10A-10K only show components of the hoist assembly such as a fixed-position hoist beam 124 positioned above the enclosure space and a sling 78 use to rig the cover to the hoist assembly. It is understood that the hoist assembly can include other components discussed above like hooks, a hoist frame and a load chain, etc.

As shown in FIGS. 10A-10K, the cover 10 while in the parking position on the cover axial pull tool 42 and when it is lifted off this tool and directed towards the beam 124, it is offset from the beam. As mentioned above with conventional cover removal operations, this offset presents a problem because the center of gravity of the cover due to its protruding section on this upper half cover portion will cause the cover to swing, sway, or flip in a direction to the cover and possibly have contact with the enclosure. This unintended contact can result in damage to the parts of the generator like stator components, as well any structure associated with the enclosure. The embodiments described above avoid this dilemma with the use of the cover axial pull tool 42 and the cover vertical lift tool 88, as these tools obviate the concern that the center of gravity of the cover will cause the cover to contact and damage the enclosure and stator parts during the removal and lifting of the cover from the enclosure of the power generator.

As the lifting operation begins in earnest per FIGS. 10E, 10F and 10G, the hoist assembly will begin lifting the cover 10 off the cover axial pull tool 42. To this extent, the hoist assembly is lifting the trolley lift assembly 92 of the vertical guide rail assembly 90, which is carrying the cover 10 thereon, along the guide rails of the assembly 90. By lifting the trolley and cover along the guide rails (i.e., the wheel assemblies 96 travel along the rails), the system ensures that the cover does not contact the enclosure and parts of the generator.

FIGS 10H, 10I, and 10J show the hoist assembly steering the cover and trolley lift assembly along the guide rails of the assembly 90 to the section where the rails transition to the sloped guide rails 106. Despite the lifting of the cover and trolley lift assembly being at its great angle in relation to the beam 124, the sloped guide rails preclude the cover from swinging or swaying at this point in the lifting operation. Further, because the cover and trolley lift assembly are at its shortest distance to the beam 124 in comparison to its locations in FIGS. 10A-10G, the system 122 can lift the cover and trolley lift assembly in a safe and controlled manner above the enclosure to avoid any contact and accompanying damage. The safe and controlled lifting of the cover and trolley lift assembly continues in FIG. 10J where these components are no longer offset from the beam 124, but instead are perpendicular to the beam.

Eventually, the wheel assemblies 96 of the trolley lift assembly 92 will be guided off the sloped guide rails 106 as shown in FIG. 10K. To this extent, the hoist assembly can continue to lift the cover 10 perpendicularly towards the beam 124 until the cover is out of the power generator plane in a location that is safe to the operators tasked to service the power generator.

Once the cover is removed and lifted safety away from the enclosure 14, operators can perform the necessary maintenance and service operations on the components of the power generator. After finishing with the maintenance and service operations on the components of the power generator, the cover 10 can be reinstalled backed in the enclosure. In general, reinstalling the cover 10 in the enclosure will entail reversing the operations performed by the cover axial pull tool 42, the cover vertical lift tool 88 and the hoist assembly 74. For example, the hoist assembly 74 will lower the cover back towards and along the guide rails and eventually place it on the cover axial pull tool. Then the guide rails and trolley can be removed respectively from the enclosure 14 and the cover. The cover axial pull tool can then be used to axially move the cover back in place to be coupled to the enclosure.

While, for purposes of simplicity of explanation, the operations shown in FIGS. 10A-10K are described as a series of acts. It is to be understood and appreciated that the subject innovation associated with FIGS. 10A-10K are not limited by the order of acts, as some acts may, in accordance therewith, occur in a different order, concurrently with other acts, be split in such a manner that portions of the displayed acts are split and performed at different time instances as two or more acts. Accordingly, modifications or variations of the acts depicted in FIGS. 10A-10K are possible. Moreover, not all illustrated acts may be required to implement a methodology in accordance with the innovation. Furthermore, two or more of the disclosed example methods can be implemented in combination with each other, to accomplish one or more features or advantages described herein.

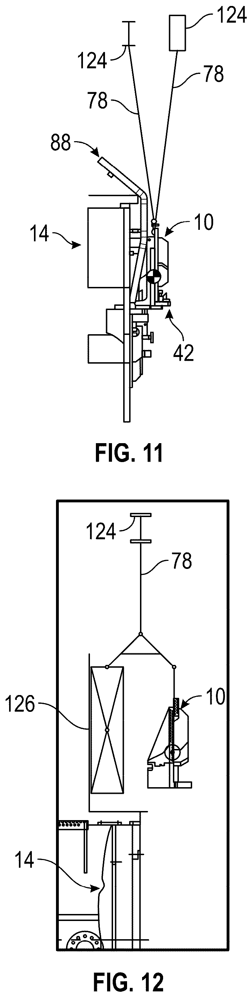

The lifting operation described in FIGS. 10A-10K represents only one approach that can be used to remove a cover from an enclosure of a power generator using the cover axial pull tool 42 and the cover vertical lift tool 88, and is not meant to be limiting as those skilled in the art will appreciate that various modifications to the system 122, as well as modifications to the cover axial pull tool 42, the cover vertical lift tool 88 and the hoist system 74 are possible. For example, instead of using one fixed-position beam as part of the hoist assembly, one possible embodiment includes using two fixed-position beams 124 as depicted in FIG. 11. In this embodiment, the two fixed-position beams 124 can be used to transfer the load of the upper half portion of the cover 10 from one hoist beam to the other hoist beam while lifting the cover up and away from the enclosure 14 via the cover vertical lift tool 88. In another embodiment as depicted in FIG. 12, the fixed-position hoist beam 124 can be of the type that includes a cantilever hoist beam with a counterweight 126 to handle the load of the upper half portion of the cover 10 while the hoist assembly lifts the cover up and away from the enclosure 14.

From the description of the embodiments presented herein, it should be evident that the subject disclosure sets forth an effective solution that addresses the complexity and challenges associated with removing a portion of a cover (e.g., an upper half portion) from an enclosure of a power generator in a limited space, especially when the cover is characterized by a protruding section geometry that is problematic in conventional removal operations due to the inclination of the cover to swing, sway or flip because of the offset of its center of gravity with respect to the fixed lifting position above the enclosure space. The use of the aforementioned cover axial pull tool and the cover vertical lift tool in conjunction with the hoist assembly allows for a safe and controlled removal and lifting of the cover from the enclosure. Not only does a system and method that utilize these components make for a safe operation that protects those operators involved in the removing and lifting process, but these tools do not require as many operators as with conventional approaches to effectuate the removal and lifting operations. In addition, the use of the cover axial pull tool, the cover vertical lift tool, and the hoist assembly makes the removal and lifting of the cover from the enclosure less time consuming and labor-intensive, as it is practically a hands-free operation. Further, the cover axial pull tool, the cover vertical lift tool, and the hoist assembly eliminate the risk that the cover will swing, sway or flip into the enclosure and cause damage to components of the generator and enclosure (e.g., stator parts, gaskets, etc.).

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize. For example, parts, components, steps and aspects from different embodiments may be combined or suitable for use in other embodiments even though not described in the disclosure or depicted in the figures. Therefore, since certain changes may be made in the above-described approaches, without departing from the spirit and scope of the improvements herein involved, it is intended that all of the subject matter of the above description shown in the accompanying drawings shall be interpreted merely as examples illustrating the inventive concept herein and shall not be construed as limiting the disclosure.

In this regard, while the disclosed subject matter has been described in connection with various embodiments and corresponding figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below. For example, references to "one embodiment" of the present disclosure are not intended to be interpreted as excluding the existence of additional embodiments that also incorporate the recited features.

In the appended claims, the terms "including" and "in which" are used as the plain-English equivalents of the respective terms "comprising" and "wherein." Moreover, in the following claims, terms such as "first," "second," "third," "upper," "lower," "bottom," "top," etc. are used merely as labels, and are not intended to impose numerical or positional requirements on their objects. The terms "substantially," "generally," and "about" indicate conditions within reasonably achievable manufacturing and assembly tolerances, relative to ideal desired conditions suitable for achieving the functional purpose of a component or assembly. Further, the limitations of the following claims are not written in means-plus-function format and are not intended to be interpreted as such, unless and until such claim limitations expressly use the phrase "means for" followed by a statement of function void of further structure.

What has been described above includes examples of systems and methods illustrative of the disclosed subject matter. It is, of course, not possible to describe every combination of components or methodologies here. One of ordinary skill in the art may recognize that many further combinations and permutations of the claimed subject matter are possible. Furthermore, to the extent that the terms "includes," "has," "possesses," and the like are used in the detailed description, claims, appendices and drawings, such terms are intended to be inclusive in a manner similar to the term "comprising" as "comprising" is interpreted when employed as a transitional word in a claim. That is, unless explicitly stated to the contrary, embodiments "comprising," "including," or "having" an element or a plurality of elements having a particular property may include additional such elements not having that property. Moreover, articles "a" and "an" as used in the subject specification and annexed drawings should generally be construed to mean "one or more" unless specified otherwise or clear from context to be directed to a singular form.

This written description uses examples to disclose several embodiments of the disclosure, including the best mode, and also to enable one of ordinary skill in the art to practice the embodiments of the disclosure, including making and using any devices or systems and performing any incorporated methods. The patentable scope of the disclosure is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

Further aspects of the disclosure are provided by the subject matter of the following clauses:
A system for removing a cover from a power generator enclosure housing a stator and a rotor, the system comprising: a cover axial pull tool to pull a section of the cover from the power generator enclosure, wherein the cover axial pull tool is configured to lift the section of the cover up and axially move the section of the cover from the power generator enclosure to disengage from a stator frame of the stator and form a spacing between the power generator enclosure and the cover axial pull tool for parking the section of the cover; a cover vertical lift tool configured for placement in the spacing to operate cooperatively with the power generator enclosure and the cover axial pull tool to provide a path for the section of the cover to navigate when lifting the cover off from the cover axial pull tool; and a hoist assembly to operate cooperatively with the cover axial pull tool and the cover vertical lift tool to lift the section of the cover up and off from the cover axial pull tool, and continuing to lift the cover upward and away from the power generator enclosure without contact thereof, while navigating the path provided by the cover vertical lift tool.

The system of the preceding clause, wherein the cover axial pull tool comprises: a cover mounting plate configured to be mounted to the section of the cover and a portion of the power generator enclosure; a vertical lift assembly coupled to the cover mounting plate that is configured to lift the section of the cover vertically after mounting the cover mounting plate to the section of the cover and the portion of the power generator enclosure; and a mechanical linear actuator assembly configured to move the cover mounting plate and the vertical lift assembly axially in relation to the power generator enclosure, wherein the mechanical linear actuator assembly is configured to disengage the section of the cover from the stator frame and axially move the cover from the power generator enclosure.

The system of any of the preceding clauses, wherein the cover mounting plate comprises: an upper section; a post support section formed of a first support post structure and a second post support structure with a spacing therebetween to support the upper section; and a base section having a first base section and a second base section to correspondingly support the first support post structure and the second support post structure thereon, wherein the upper section is configured to be mounted to the section of the cover and the base section is configured to be mounted to a portion of the power generator enclosure.

The system of any of the preceding clauses, wherein the mechanical linear actuator assembly comprises: a pair of traveling plates spaced apart from each other to facilitate axial movement of the cover mounting plate and the vertical lift assembly in relation to the power generator enclosure; a pair of linear bearings each configured to receive one of the pair of traveling plates thereon; and a pair of screw drive systems operatively coupled to the pair of linear bearings to drive axial movement of the cover mounting plate and the vertical lift assembly along the pair of linear bearings.

The system of any of the preceding clauses, wherein each of the pair of screw drive systems comprises: a thread rod with an external thread formed thereon; a thread nut with an internal thread corresponding to operate cooperatively with the external thread of the thread rod; and a drive wheel to rotate the thread rod within the thread nut, wherein rotation of the drive wheel results in a sliding interaction between the thread rod within the thread nut causing a translatory motion of the cover mounting plate and the vertical lift assembly.

The system of any of the preceding clauses, wherein the vertical lift assembly comprises: a pair of vertically-oriented linear bearings; and pair of hydraulic cylinders operatively coupled with the pair of vertically-oriented linear bearings, wherein each of the pair of hydraulic cylinders is configured to receive hydraulic energy that generates a linear force and motion to advance the cylinder upwards along one of the pair of vertically-oriented linear bearings.

The system of any of the preceding clauses, wherein the vertical lift assembly further comprises a pair of limit screws configured to lock the pair of hydraulic cylinders in position in the pair of vertically-oriented linear bearings after advancing upwards to a predetermined position.

The system of any of the preceding clauses, wherein the cover vertical lift tool comprises: a vertical guide rail assembly configured for coupling to the power generator enclosure; and a trolley lift assembly to receive the section of the cover from the cover axial pull tool, wherein the hoist assembly is configured to lift the section of the cover on the trolley lift assembly upwards along the vertical guide rail assembly preventing any contact between the section of the cover and the power generator enclosure.

The system of any of the preceding clauses, wherein the trolley lift assembly comprises a pair of trolley posts, with each of the trolley posts having a wheel assembly on one side of the post, wherein an opposing side of the post is configured to be mounted to the section of the cover.

The system of any of the preceding clauses, wherein the vertical guide rail assembly comprises: a pair of vertically oriented guide rails, each of the vertically oriented guide rails having a bottom section and a top section, wherein the bottom section is configured to be mounted to a section of the power generator enclosure and the top section is configured to extend vertically upward and beyond a periphery of the power generator enclosure after mounting the bottom section to the power generator enclosure; a pair of horizontally extending cross rails coupling the pair of vertically oriented guide rails with each other; and a pair of sloped guide rails extending obliquely from the top sections of the pair of vertically oriented guide rails, with each of the sloped guide rails extending over the power generator enclosure, wherein the hoist assembly is configured to steer the wheel assemblies on the pair of trolley posts along the pair of vertically oriented guide rails and the pair of sloped guide rails while the hoist assembly lifts the trolley lift assembly and the section of the cover placed thereon upwards off from the cover axial pull tool to above the power generator enclosure.

The system of any of the preceding clauses, wherein the hoist assembly includes at least one fixed-position hoist beam located above the power generator enclosure that is configured to support the lifting of the section of the cover off from the cover axial pull tool and along the cover vertical lift tool and above the power generator enclosure.

The system of any of the preceding clauses, wherein the at least one fixed-position hoist beam comprises two fixed-position hoist beams to transfer the load of the section of the cover from one hoist beam to the other hoist beam while lifting the cover up and away from the generator enclosure.

The system of any of the preceding clauses, wherein the at least one fixed-position hoist beam comprises a cantilever hoist beam with a counterweight to handle the load of the section of the cover while lifting the cover up and away from the generator enclosure.

A method for removing a cover from a power generator enclosure housing a stator and a rotor, the method comprising: placing a cover axial pull tool in a position adjacent to the cover of the power generator enclosure; mounting the cover axial pull tool to a section of the cover and a portion of the power generator enclosure; using the cover axial pull tool to lift the section of the cover; using the cover axial pull tool to axially move the section of the cover from the power generator enclosure to disengage from a stator frame of the stator and form a spacing between the power generator enclosure and the cover axial pull tool; placing a cover vertical lift tool in the spacing formed between the power generator enclosure and the cover axial pull tool after axially moving the section of the cover from the power generator enclosure, the cover vertical lift tool providing a guided path for the section of the cover to navigate when lifting the cover off from the cover axial pull tool; using a hoist assembly to lift the section of the cover up and off from the cover axial pull tool; directing the hoist assembly to steer the section of the cover along the guided path provided by the cover vertical lift tool; and continuing to use the hoist assembly to navigate the guided path provided by the cover vertical lift tool while lifting the section of the cover upward and away from the power generator enclosure without contact thereof.

The method of the preceding clause, wherein: the cover axial pull tool comprises: a cover mounting plate configured to be mounted to the section of the cover and a portion of the power generator enclosure; a vertical lift assembly coupled to the cover mounting plate that is configured to lift the section of the cover vertically after mounting the cover mounting plate to the section of the cover and the portion of the power generator enclosure; and a mechanical linear actuator assembly configured to move the cover mounting plate and the vertical lift assembly axially in relation to the power generator enclosure, wherein the mechanical linear actuator assembly is configured to disengage the section of the cover from the stator frame and axially move the cover from the power generator enclosure; and wherein the cover vertical lift tool comprises: a vertical guide rail assembly configured for coupling to the power generator enclosure; and a trolley lift assembly to receive the section of the cover from the cover axial pull tool, wherein the hoist assembly is configured to lift the section of the cover on the trolley lift assembly upwards along the vertical guide rail assembly, preventing any contact between the section of the cover and the power generator enclosure.

### Parts List:

- 10: cover/end shield
- 12: protruding inner face of cover 10
- 14: enclosure
- 16: power generator
- 18: hoist assembly
- 20: rotor
- 22: beam
- 24: prime mover
- 26: slings or tag lines
- 27: operator
- 28: semi-circular shaped section of cover 10
- 30: cut-out of cover 10
- 32: base section formed of base sections 32a and 32b
- 34: mounting holes
- 36: inner face of cover 10 that attaches to enclosure 14
- 38: structural ribs
- 40: outer face of cover 10
- 42: cover axial pull tool
- 44: cover mounting plate
- 46: vertical lift assembly
- 48: mechanical linear actuator assembly
- 50: semi-circular shaped upper section of the cover mounting plate 44
- 51: fasteners (bolts) on semi-circular shaped upper section 50 of the cover mounting plate 44
- 52: post support section of the cover mounting plate 44 formed of a first support post structure 52a and a second post support structure 52b
- 53: lugs
- 54: base section of the cover mounting plate formed of a first base section 54a and a second base section 54b
- 55: fastener
- 56: pair of traveling plates of the mechanical linear actuator assembly 48
- 58: pair of linear bearings of the mechanical linear actuator assembly 48
- 60: screw drive systems of the mechanical linear actuator assembly 48

- 62: thread rod of a screw drive system 60
- 64: thread nut of a screw drive system 60
- 66: drive wheel
- 68: vertically-oriented linear bearings of the vertical lift assembly 46
- 70: hydraulic cylinders of the vertical lift assembly 46
- 72: limit screws 72 of the vertical lift assembly 46
- 74: hoist assembly
- 76: lower hook of hoist assembly
- 78: slings
- 80: hoist frame
- 82: load chain
- 84: stator frame
- 86: disengagement of cover from stator frame
- 88: cover vertical lift tool
- 90: vertical guide rail assembly
- 92: trolley lift assembly of vertical guide rail assembly 90
- 94: pair of trolley posts
- 96: wheel assembly on trolley posts 94
- 98: pair of vertically oriented guide rails of vertical guide rail assembly 90
- 100: bottom section of guide rail 98
- 102: top section of guide rail 98
- 103: connector coupling bottom section 100 and top section 102 of guide rail 98
- 104: horizontally extending cross rails
- 106: pair of sloped guide rails 106
- 108: lifting plate coupled to mounting holes on the peripheral edge of the semi-circular shaped section 28 of cover 10
- 110: rotor support section of enclosure 14
- 112: bottom support portion of rotor support section 110
- 114: side platform portions of the rotor support section 110
- 116: mounting bolts and nut assembly
- 118: semi-circular portion of the enclosure 14 that encompasses the rotor
- 120: lifting points on horizontally extending cross rails 104
- 122: system
- 124: fixed position hoist beam
- 126: counterweight

## Claims

1. A system for removing a cover from a power generator enclosure housing a stator and a rotor, the system comprising:
a cover axial pull tool to pull a section of the cover from the power generator enclosure, wherein the cover axial pull tool is configured to lift the section of the cover up and axially move the section of the cover from the power generator enclosure to disengage from a stator frame of the stator and form a spacing between the power generator enclosure and the cover axial pull tool for parking the section of the cover;
a cover vertical lift tool configured for placement in the spacing to operate cooperatively with the power generator enclosure and the cover axial pull tool to provide a path for the section of the cover to navigate when lifting the cover off from the cover axial pull tool; and
a hoist assembly to operate cooperatively with the cover axial pull tool and the cover vertical lift tool to lift the section of the cover up and off from the cover axial pull tool, and continuing to lift the cover upward and away from the power generator enclosure without contact thereof, while navigating the path provided by the cover vertical lift tool.

2. The system of claim 1, wherein the cover axial pull tool comprises:
a cover mounting plate configured to be mounted to the section of the cover and a portion of the power generator enclosure;
a vertical lift assembly coupled to the cover mounting plate that is configured to lift the section of the cover vertically after mounting the cover mounting plate to the section of the cover and the portion of the power generator enclosure; and
a mechanical linear actuator assembly configured to move the cover mounting plate and the vertical lift assembly axially in relation to the power generator enclosure, wherein the mechanical linear actuator assembly is configured to disengage the section of the cover from the stator frame and axially move the cover from the power generator enclosure.

3. The system of claim 2, wherein the cover mounting plate comprises:
an upper section;
a post support section formed of a first support post structure and a second post support structure with a spacing therebetween to support the upper section; and
a base section having a first base section and a second base section to correspondingly support the first support post structure and the second support post structure thereon, wherein the upper section is configured to be mounted to the section of the cover and the base section is configured to be mounted to a portion of the power generator enclosure.

4. The system of claim 2, wherein the mechanical linear actuator assembly comprises:
a pair of traveling plates spaced apart from each other to facilitate axial movement of the cover mounting plate and the vertical lift assembly in relation to the power generator enclosure;
a pair of linear bearings each configured to receive one of the pair of traveling plates thereon; and
a pair of screw drive systems operatively coupled to the pair of linear bearings to drive axial movement of the cover mounting plate and the vertical lift assembly along the pair of linear bearings.

5. The system of claim 4, wherein each of the pair of screw drive systems comprises:
a thread rod with an external thread formed thereon;
a thread nut with an internal thread corresponding to operate cooperatively with the external thread of the thread rod; and
a drive wheel to rotate the thread rod within the thread nut, wherein rotation of the drive wheel results in a sliding interaction between the thread rod within the thread nut causing a translatory motion of the cover mounting plate and the vertical lift assembly.

6. The system of claim 2, wherein the vertical lift assembly comprises:
a pair of vertically-oriented linear bearings; and
pair of hydraulic cylinders operatively coupled with the pair of vertically-oriented linear bearings, wherein each of the pair of hydraulic cylinders is configured to receive hydraulic energy that generates a linear force and motion to advance the cylinder upwards along one of the pair of vertically-oriented linear bearings.

7. The system of claim 6, wherein the vertical lift assembly further comprises a pair of limit screws configured to lock the pair of hydraulic cylinders in position in the pair of vertically-oriented linear bearings after advancing upwards to a predetermined position.

8. The system of claim 1, wherein the cover vertical lift tool comprises:
a vertical guide rail assembly configured for coupling to the power generator enclosure; and
a trolley lift assembly to receive the section of the cover from the cover axial pull tool,
wherein the hoist assembly is configured to lift the section of the cover on the trolley lift assembly upwards along the vertical guide rail assembly preventing any contact between the section of the cover and the power generator enclosure.

9. The system of claim 8, wherein the trolley lift assembly comprises a pair of trolley posts, with each of the trolley posts having a wheel assembly on one side of the post, wherein an opposing side of the post is configured to be mounted to the section of the cover.

10. The system of claim 9, wherein the vertical guide rail assembly comprises:
a pair of vertically oriented guide rails, each of the vertically oriented guide rails having a bottom section and a top section, wherein the bottom section is configured to be mounted to a section of the power generator enclosure and the top section is configured to extend vertically upward and beyond a periphery of the power generator enclosure after mounting the bottom section to the power generator enclosure;
a pair of horizontally extending cross rails coupling the pair of vertically oriented guide rails with each other; and
a pair of sloped guide rails extending obliquely from the top sections of the pair of vertically oriented guide rails, with each of the sloped guide rails extending over the power generator enclosure,
wherein the hoist assembly is configured to steer the wheel assemblies on the pair of trolley posts along the pair of vertically oriented guide rails and the pair of sloped guide rails while the hoist assembly lifts the trolley lift assembly and the section of the cover placed thereon upwards off from the cover axial pull tool to above the power generator enclosure.

11. The system of claim 1, wherein the hoist assembly includes at least one fixed-position hoist beam located above the power generator enclosure that is configured to support the lifting of the section of the cover off from the cover axial pull tool and along the cover vertical lift tool and above the power generator enclosure.

12. The system of claim 11, wherein the at least one fixed-position hoist beam comprises two fixed-position hoist beams to transfer the load of the section of the cover from one hoist beam to the other hoist beam while lifting the cover up and away from the generator enclosure.

13. The system of claim 11, wherein the at least one fixed-position hoist beam comprises a cantilever hoist beam with a counterweight to handle the load of the section of the cover while lifting the cover up and away from the generator enclosure.

14. A method for removing a cover from a power generator enclosure housing a stator and a rotor, the method comprising:
placing a cover axial pull tool in a position adjacent to the cover of the power generator enclosure;
mounting the cover axial pull tool to a section of the cover and a portion of the power generator enclosure;
using the cover axial pull tool to lift the section of the cover;
using the cover axial pull tool to axially move the section of the cover from the power generator enclosure to disengage from a stator frame of the stator and form a spacing between the power generator enclosure and the cover axial pull tool;
placing a cover vertical lift tool in the spacing formed between the power generator enclosure and the cover axial pull tool after axially moving the section of the cover from the power generator enclosure, the cover vertical lift tool providing a guided path for the section of the cover to navigate when lifting the cover off from the cover axial pull tool;
using a hoist assembly to lift the section of the cover up and off from the cover axial pull tool;
directing the hoist assembly to steer the section of the cover along the guided path provided by the cover vertical lift tool; and
continuing to use the hoist assembly to navigate the guided path provided by the cover vertical lift tool while lifting the section of the cover upward and away from the power generator enclosure without contact thereof.

15. The method of claim 14, wherein:
the cover axial pull tool comprises:
a cover mounting plate configured to be mounted to the section of the cover and a portion of the power generator enclosure;
a vertical lift assembly coupled to the cover mounting plate that is configured to lift the section of the cover vertically after mounting the cover mounting plate to the section of the cover and the portion of the power generator enclosure; and
a mechanical linear actuator assembly configured to move the cover mounting plate and the vertical lift assembly axially in relation to the power generator enclosure, wherein the mechanical linear actuator assembly is configured to disengage the section of the cover from the stator frame and axially move the cover from the power generator enclosure; and
wherein the cover vertical lift tool comprises:
a vertical guide rail assembly configured for coupling to the power generator enclosure; and
a trolley lift assembly to receive the section of the cover from the cover axial pull tool,
wherein the hoist assembly is configured to lift the section of the cover on the trolley lift assembly upwards along the vertical guide rail assembly, preventing any contact between the section of the cover and the power generator enclosure.
